# EUROPEAN PATENT SPECIFICATION

(11) **EP 0 960 862 B1**
(45) Date of publication and mention of the grant of the patent: **25.06.2003**
(21) Application number: 98830313.7
(22) Date of filing: 21.05.1998
(51) Int. Cl.: C03B 5/26, C03B 5/24, F27D 3/14, F27B 3/19

(54) **A level control apparatus for a liquid-state material in smelting furnaces and the like, in particular in furnaces for processing rock wool**
Niveauregelvorrichtung für ein flüssiges Material in einem Schmelzofen oder ähnlichem, insbesondere in Öfen zur Herstellung von Steinwolle
Appareil de régulation de niveau d'une matière à l'état liquide dans des fours de fusion ou similaire, en particulier des fours de production de laine minérale

(43) Date of publication of application: 01.12.1999
(73) Proprietor: TECHINT COMPAGNIA TECNICA INTERNAZIONALE S.p.A., 20149 Milano (IT)
(72) Inventor: Airola, Caj Juhani, 61166 Nykoeping (SE)
(74) Representative: Tansini, Elio Fabrizio

(56) References cited:
- EP-A- 0 176 497
- EP-A- 0 551 056
- EP-A- 0 568 280
- DE-A- 4 005 748
- DE-A- 4 033 304
- DE-C- 4 112 162
- GB-A- 2 043 049
- US-A- 4 029 887
- PATENT ABSTRACTS OF JAPAN vol. 9, no. 261 (M-422) [1984], 18 October 1985 & JP 60 108146 A (NIPPON DENKI K.K.), 13 June 1985

## Description

The present invention relates to a level control apparatus for a liquid-state material in smelting furnaces and the like, in particular in furnaces for processing rock wool.

It is known that in some production cycles, electric smelting furnaces or other types of furnaces are used in which chemical reactions addressed to separating a compound or element, by smelting, from the material mass introduced into the furnace are performed.

It is known that, in processing raw materials from which rock wool is drawn, a smelting furnace is currently used in which heat is produced by passage of electric current between the electrodes of graphite material immersed from top in the chamber of the furnace itself.

Known chemical reactions taking place in these raw materials within the furnace chamber lead to a reduction in the iron oxides contained therein, that is separation of iron in a liquid state from the mass of the remaining oxides, which generally are silicon, calcium and magnesium oxides having a much higher melting temperature.

Practically, in the lower part of the furnace chamber, consisting of a concave or inverted-dome-shaped bottom wall for example, iron in a liquid state is stored, as it is heavier, whereas in the upper part of the chamber generally of cylindrical conformation, there are the other above mentioned oxides.

Due to the composition and chemical-attack properties of the last-mentioned oxides, lining in the upper part of the furnace walls is required to be made of a refractory material which however is not appropriate for contact with liquid iron. The lower part of the furnace chamber in which the liquid iron is stored must be therefore lined with another type of refractory material which, in turn, is not appropriate for withstanding the chemical features of the materials disposed over the iron bath.

As chemical reactions go on, the level of the liquid iron bath increases and, due to the fact that for a good efficiency of the concerned process the graphite electrodes immersed into the material located over the liquid iron are to be constantly kept at a distance preferably included between 20 and 50 mm from the upper surface of said iron, and they must not come at all into contact with iron in order to avoid short circuits that would interrupt the process being carried out, it is required that the liquid iron should be partly evacuated so as to avoid accumulation of an excess amount of it.

In the known art, for level control of the liquid iron provision is made for employment of apertures and related exhaust valves located at the lower part of the furnace walls, through which the liquid iron in excess can be periodically discharged.

This known technique has some important drawbacks.

It only enables a rough control of the true liquid-iron level because opening of the exhaust valves is based on a well-established practice of furnace running and not on the actual progress of the iron-separation process.

Consequently the surface of the liquid-iron bath is subjected to even important level variations giving rise both to contacts of the liquid iron with a band of the refractory material located at the upper part of the furnace when its level is in excess relative to the boundary line between the two refractories with which the furnace chamber is lined, and to contacts of the materials under the iron with a band of the refractory material covering the lower furnace part when the liquid-bath levels are under such a boundary line.

Practically, the adjacent bands of the two refractory types are subjected to unforeseeable wearing actions that reduce the overall lifetime of said refractories.

It is also to note that the above described known art for controlling level oscillation of the liquid iron does not completely ensure that the graphite electrodes do not come into contact with the liquid iron so as to avoid short circuits taking place, which would bring about serious consequences for the production process in progress.

In addition, in the known art, lowering of the electrodes which is required so as to compensate for consumption taking place during the furnace operation can be carried out only in an imprecise manner due to the rough evaluation of the real oscillations of the liquid-iron surface. Therefore often the distance between the lower end of the electrodes and the liquid iron is not the optimal one for the production process.

It is also known from document GB 2043049 a device for controlling the discharge of molten material from a melter in which the continuous discharge is obtained by using lateral pathways.

A first pathway has an end portion placed at a lower height than a desired constant level of the liquid-state material. The pathway comprises an upper stretch relative to the first portion which defines a weir sill disposed at the height of said constant level.

The device also comprises a second pathway extending downwardly starting from the weir sill to channel the material going over the weir sill itself.

Under this situation, the technical task underlying the present invention is to devise a level control apparatus for liquid-state materials in smelting furnaces, capable of substantially obviating the above mentioned drawbacks.

Within the scope of this technical task it is an important aim of the invention to devise a level control apparatus for liquid-state materials in smelting furnaces capable of absolutely avoiding contact of same with the graphite electrodes present in said furnaces.

Another important aim of the invention is to devise an apparatus enabling uneven and abnormal wear of the refractories lining the furnace interior to be avoided.

It is a further aim of the invention to devise an apparatus of simple structure and reliable operation.

The technical task mentioned and the aims specified are substantially achieved by an apparatus according to the appended claims.

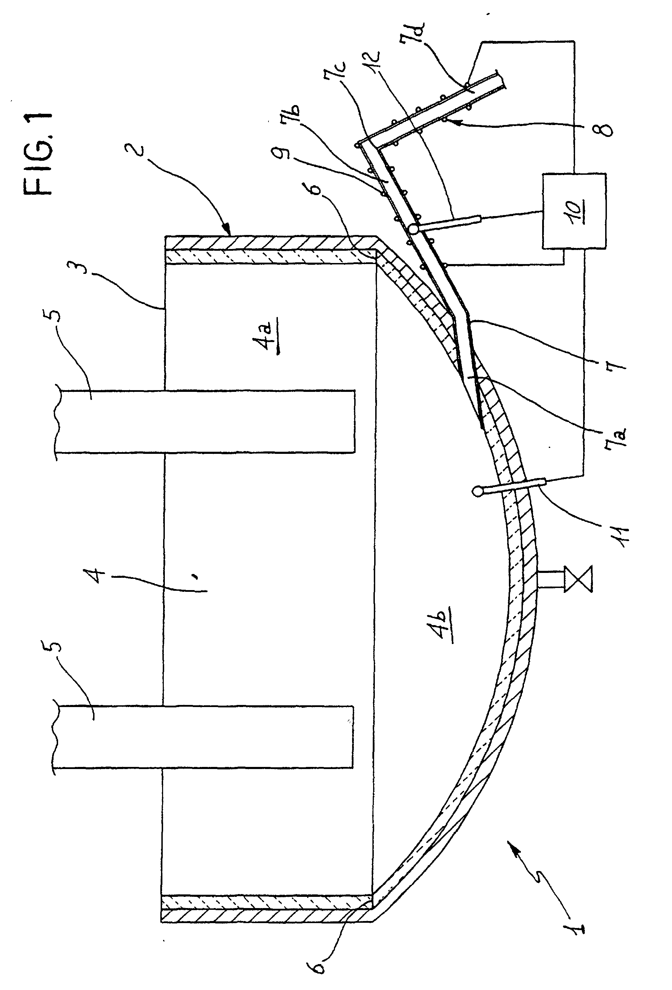

Description of a preferred, non-exclusive embodiment of an apparatus in accordance with the invention is now given hereinafter, by way of non-limiting example, in the accompanying drawing in which it is diagrammatically shown a vertical section of a smelting furnace to which the apparatus of the invention is applied.

With reference to the mentioned figure, the apparatus is generally identified by reference numeral 1.

Apparatus 1 is in particular applied to a smelting furnace 2 for processing rock wool consisting of a vessel 3 the walls of which define an inner chamber 4 divided into an upper part 4a of substantially cylindrical conformation and a lower part 4b which is in the form of an inverted done, for example.

The upper part 4a is intended for housing the raw materials to be used for producing rock wool, mainly formed of silicon, calcium, magnesium and iron oxides.

For melting, the furnace 2 is provided with graphite electrodes 5 immersed from top in the upper part 4a of the inner chamber 4. Iron in a liquid state accumulates in the lower part 4b at a higher temperature than its melting temperature.

The upper part 4a is lined with a special type of a refractory material, adapted to withstand the chemical features of the material put into contact therewith, whereas the lower part 4b is protected by a second type of refractory material provided for withstanding liquid iron.

Practically, the two types of refractories are put close to each other along a contact line 6 corresponding to the passage line between the upper part 4a and lower part 4b of the inner chamber 4.

Apparatus 1 comprises at least one pipeline 7, advantageously made, for istance, of silicon carbide, extending externally of furnace 2 and having a first end portion 7a fitted in the chamber 4 wall at a lower height than the desired constant level of the liquid-state iron stored in the lower part 4b.

This desired constant level practically coincides with the contact line 6 between the first refractory of the upper part 4a and the second refractory of the lower part 4b.

The first end portion 7a of pipeline 7 7 is in communication with the lower part 4b of chamber 4 and therefore with the liquid iron held therein.

Pipeline 7 extends upwardly starting from the first end portion 7a and comprises an upper stretch 7b adapted to define a weir sill 7c, that is a discharge for the liquid iron disposed at the height of the desired constant level 6.

Preferably, pipeline 7 comprises a second end portion 7d extending downwardly consecutively to the upper stretch 7b and adapted to channel the liquid iron going over the weir sill 7c.

At all events, in order to optimize control of the molten-material level, a predetermined number of pipelines 7 associated with the lower part 4b of chamber 4 can be utilized.

If necessary, these pipelines will have shapes and sections different from each other.

Appropriate heating means 8 is applied to pipeline 7, which means is adapted to constantly keep the iron contained therein in a liquid state. In this manner partial or complete clogging of the pipeline so that it may no longer perform its function is avoided.

The heating means 8 comprises an electric resistor 9 preferably uniformly wound up around pipeline 7 and a temperature control device 10 capable of adjusting the electric current in resistor 9 so as to keep the iron temperature within pipeline 7 substantially equal to that detected within chamber 4 and thus obtain a regular flowing of the liquid iron.

The control device 10 may be based, for example, on employment of a first thermocouple 11 disposed within chamber 4 and a second thermocouple 12 disposed within pipeline 7 so that temperatures detected by said instruments can be constantly compared and, depending on this comparison, the electric current for heating or not the pipeline can be suitably varied.

Advantageously, pipeline 7, so that it may be uniformly heated and regions at differentiated temperatures may be avoided, has inner and outer surfaces of substantially circular conformation, that is devoid of sharp corners.

It is in fact apparent that a section of rectangular shape for example, would give rise to arrangement problems as regards resistors in an attempt to uniformly heat the pipeline, in particular with reference to corners.

With the use of the above described apparatus, speaking above all from a structural point of view, it is possible to keep the liquid-iron level within the furnace substantially constant. As a matter of fact, due to the principle of the communicating vessels the liquid iron level within pipeline 7 is constantly equal to that within chamber 4 and consequently, provided that the weir sill 7c of the pipeline itself (i.e. the maximum height that the liquid iron within said pipeline can reach before discharging begins) is located exactly in the same horizontal plane as the desired constant level, the liquid iron level in the furnace can never exceed said desired level.

Therefore, the apparatus in accordance with the invention, when chemical reactions are being carried out, gives rise to a regular evacuation of iron as soon as the liquid iron has reached the level of the weir sill 7c and, as a result, said level within the furnace is maintained practically constant and equal to the desired value.

At all events, exhaust valves can be used in the lower part of the chamber, which valves are operated manually and can be activated under emergency situations for example, or when discharge of the whole iron from the furnace is required.

The invention achieves important advantages.

First of all the apparatus in accordance with the present invention enables any risk of contact between the graphite electrodes and the liquid-iron bath to be avoided because the liquid-iron level can never exceed the value defined by the pipeline weir sill.

In addition, a downward displacement of the graphite electrodes can be carried out by calculating an exact descent velocity that exclusively takes into account a consumption linked to iron reduction, due to the constant level of said liquid-state iron. Thus, the distance between the lower end of the electrodes and the liquid-iron surface can be always the optimum one.

Finally, by placing the weir sill of the apparatus exactly at the height of the separation line between the two refractory types intended for iron and the remaining materials, these refractories are permanently and exclusively in contact with the chemically-correct materials and therefore offer the best features in terms of strength and duration.

## Claims

1. Level control apparatus for a melting furnace , in particular furnace for rock wool processing, comprising:
- at least one pipeline (7) extending externally of said furnace (2) and having a first end portion (7a) inserted in a furnace (2) wall at a lower height than a desired constant level (6) of the liquid-state material and in communication with an inner chamber (4) of the furnace (2) in which said material is stored, said pipeline (7) comprising an upper stretch (7b) relative to said first end portion (7a), which defines a weir sill (7c) disposed at the height of said constant level (6), heating means (8) applied to said at least one pipeline (7), and adapted to keep said material constantly in a liquid state within said pipeline (7), **characterized by** the fact that said heating means (8) includes a control device (10) for detecting both the temperature of the liquid-state material contained in said pipeline (7) and the temperature of the liquidn -state material contained in the chamber (4) of the furnace (7), said device (10) being capable of comparing the detected temperatures and of regulating the heating means so as to keep the temperature of the liquid-state material in the pipeline (7) substantially equal to the temperature of the liquid-state material in the lower part of the chamber (46) of the furnace (2).

2. An apparatus as claimed in claim 1, **characterized in that** said at least one pipeline (7) has an inner surface of substantially cylindrical conformation.

3. An apparatus as claimed in claim 1, **characterized in that** said liquid-state material substantially consists of iron and said at least one pipeline (7) is made of silicon carbide.

4. An apparatus as claimed in claim 1, **characterized in that** said at least one pipeline (7) comprises a second end portion (7d) extending downwardly starting from said weir sill (7c) and is adapted to channel the liquid-state material going over said weir sill (7c).

5. An apparatus as claimed in claim 1, **characterized in that** it comprises a predetermined number of said pipelines (7).

6. An apparatus as claimed in claim 1, **characterized in that** the heating means comprises at least one first and one second thermocouples (11, 12) communicating with the temperature control device (10), said first thermocouple (11) being capable of detecting a temperature of the liquid-state material contained in the chamber (4), said second thermocouple (12) being capable of detecting a temperature of the liquid-state material contained in the pipeline (7).

## Patentansprüche

1. Niveauregelvorrichtung für ein flüssiges Material in einem Schmelzofen, insbesondere in Öfen zur Herstellung von Steinwolle, umfassend:
- mindestens eine Rohrleitung (7), die sich außerhalb des Ofens (2) abwickelt und einen ersten Abschnitt (7a) aüfweist, der in einem Teil des Ofens (2) an einer Höhe unterhalb des gewünschten konstanten Niveaus (6) des Materials in flüssigem Zustand eingebracht und mit einer Innenkammer (4) des Ofens (2) verbunden ist, wo das Material angesammelt ist, wobei die Rohrleitung (7) einen gegenüber dem ersten Endabschnitt (7a) oberen Abschnitt (7b) umfasst, der eine Überlaufschwelle (7c) festlegt, die auf der Höhe des konstanten Niveaus (6) angeordnet ist, Heizmittel (8), die an mindestens einer Rohrleitung (7) angebracht sind und das Material stetig im flüssigen Zustand innerhalb der Rohrleitung (7) halten, **dadurch gekennzeichnet, dass** die Heizmittel (8) eine Überwachungsvorrichtung (10) erfassen sowohl der Temperatur des in der Rohrleitung (7) enthaltenen Materials im flüssigen Zustand als auch der Temperatur des in der Kammer (4) des Ofens (7) enthaltenen Materials im flüssigen Zustand umfassen, wobei die Überwachungsvorrichtung (10) imstande ist, die erfassten Temperaturen zu vergleichen und die Heizmittel derart zu regeln, dass die Temperatur des Materials im flüssigen Zustand in der Rohrleitung (7) im wesentlichen gleich der Temperatur des Materials im flüssigen Zustand im unteren Teil der Kammer (46) des Ofens (2) gehalten wird.

2. Vorrichtung nach Anspruch 1, **dadurch gekennzeichnet, dass** mindestens eine Rohrleitung (7) eine innere Oberfläche im wesentlichen zylindrischer Ausbildung aufweist.

3. Vorrichtung nach Anspruch 1, **dadurch gekennzeichnet, dass** das Material im flüssigen Zustand im wesentlichen aus Eisen besteht und die mindestens eine Rohrleitung (7) in Siliziumkarbit ausgeführt ist.

4. Vorrichtung nach Anspruch 1, **dadurch gekennzeichnet, dass** die mindestens eine Rohrleitung (7) einen zweiten Endabschnitt (7d) umfasst, der ausgehend von der Überlaufschwelle (7c) nach unten abwickelt und fähig ist, das Material im flüssigen Zustand, das die Überlaufschwelle (7c) überschreitet, zu kanalisieren.

5. Vorrichtung nach Anspruch 1, **dadurch gekennzeichnet, dass** sie eine vorgegebene Anzahl von Rohrleitungen (7) umfasst.

6. Vorrichtung nach Anspruch 1, **dadurch gekennzeichnet, dass** die Heizmittel mindestens ein erstes und ein zweites Thermoelement (11, 12) umfassen, die mit der Temperaturüberwachungsvorrichtung (10) verbunden sind, wobei das erste Thermoelement (11) fähig ist, eine Temperatur des in der Kammer (4) enthaltenen Materials im flüssigen Zustand zu erfassen, wobei das zweite Thermoelement (12) fähig ist, eine Temperatur des in der Rohrleitung (7) enthaltenen Materials zu erfassen.

## Revendications

1. Appareil de régulation de niveau pour un four de fusion, en particulier un four de production de laine minérale, comprenant:
- au moins une canalisation (7) s'étendant à l'extérieur dudit four (2) et ayant une première portion terminale (7a) insérée dans une paroi du four (2) à une hauteur plus basse qu'un niveau constant désiré (6) de la matière à l'état liquide et en communication avec une chambre intérieure (4) du four (2) dans lequel ladite matière est emmagasinée, ladite canalisation (7) comprenant un tronçon supérieur (7b) par rapport à ladite première portion terminale (7a) définissant un seuil de déversoir (7c) disposé à la hauteur dudit niveau constant (6), des moyens chauffants (8) appliqués à ladite au moins une canalisation (7), et destinés à maintenir ladite matière constamment à l'état liquide dans ladite canalisation (7), **caractérisé en ce que** lesdits moyens chauffants (8) comportent un dispositif de contrôle pour détecter soit la température de la matière à l'état liquide contenue dans ladite canalisation (7), soit la température de la matière à l'état liquide contenue dans la chambre (4) du four (7), ledit dispositif (10) étant en mesure de comparer les températures détectées et de régler les moyens chauffants de manière à maintenir la température de la matière à l'état liquide dans la canalisation (7) essentiellement égale à la température de la matière à l'état liquide dans la partie inférieure de la chambre (46) du four (2).

2. Appareil selon la revendication 1, **caractérisé en ce que** ladite au moins une canalisation (7) a une surface intérieure de conformation essentiellement cylindrique.

3. Appareil selon la revendication 1, **caractérisé en ce que** ladite matière à l'état liquide se compose essentiellement de fer et ladite au moins une canalisation (7) est réalisée en carbure de silicium.

4. Appareil selon la revendication 1, **caractérisé en ce que** ladite au moins une canalisation (7) comporte une deuxième portion terminale (7d) s'étendant vers le bas à partir dudit seuil de déversoir (7c) et est apte à canaliser la matière à l'état liquide dépassant ledit seuil de déversoir (7c).

5. Appareil selon la revendication 1, **caractérisé en ce qu'**il comporte un nombre prédéterminé desdites canalisations (7).

6. Appareil selon la revendication 1, **caractérisé en ce que** les moyens chauffants comportent au moins un premier et un deuxième thermocouples (11, 12) en communication avec le dispositif de contrôle de la température (10), ledit premier thermocouple (11) étant en mesure de détecter la température de la matière à l'état liquide contenue dans ladite chambre (4), ledit deuxième thermocouple (12) étant en mesure de détecter la température de la matière à l'état liquide contenue dans la canalisation (7).
